Europäisches Patentamt

European Patent Office

Office européen des brevets

(11) Publication number: **0 129 665**
**A1**

# (12) EUROPEAN PATENT APPLICATION

(21) Application number: 84104537.0

(22) Date of filing: 21.04.84

(51) Int. Cl.⁴: **F 16 K 11/04**

(30) Priority: 26.05.83 IT 2131683

(43) Date of publication of application:
02.01.85 Bulletin 85/1

(84) Designated Contracting States:
CH DE FR GB LI SE

(71) Applicant: Migliori, Luciano
Via F.lli Cervi Residenza dei Cerchi app. 361 Milano Due
I-20090 Segrate, Milano(IT)

(72) Inventor: Migliori, Luciano
Via F.lli Cervi Residenza dei Cerchi app. 361 Milano Due
I-20090 Segrate, Milano(IT)

(74) Representative: Petruzzelli, Antonio
Via E. De Amicis No. 25
I-20123 Milan(IT)

(54) Sliding valve for pneumatic circuits.

(57) A sliding valve or fluid distributing device, for pneumatic circuits, of the type comprising a central distributing chamber (2) connected with a fluid inlet (3) and, respectively, fluid outlets (4, 5) by means of lateral chambers (6, 7) axially aligned with the central chamber (2); and a poppet spool (17) sliding in the aforesaid chambers (2, 6, 7), which is provided with a fluid control unit (16) in the aforesaid lateral chambers (6, 7). Each fluid control unit (16) comprises a first poppet element (22) designed to close against a valve seat (12) communicating with the distributing chamber (2) and a second poppet element (24) opposite the first comprising a flexible annular seal designed to close against a flat valve seat (14), communicating with a discharge chamber (8) to automatically compensate for wear and any variations in the working strokes of the two flow control units (16).

Fig.1

EP 0 129 665 A1

## Sliding valve for pneumatic circuits

This invention refers to a sliding valve for distributing fluid, under pressure, in pneumatic circuits and the like, and in particular to a five-way type distributor having an inlet for the fluid which must be connected with outlets for feeding the fluid to utilizer systems and, respectively, with separate discharge outlets; this invention can be applied both to distributors of the mono-stable and of the bi-stable types.

There are known sliding valves of the type comprising a valve casing having an axial cavity defining a central distributing chamber which communicates with lateral chambers for feeding the fluid to a utilizer system; said lateral chambers, in turn, communicate with respective discharge chambers, axially aligned with the latter. A mobile spool supports two opposing flow control units and slides axially within the aforesaid chambers between two extreme operative positions, in each of which it puts the central distributing chamber in communication with one of the lateral chambers and, respectively, connects the other lateral chamber with the relative discharge chamber.

In sliding valves of the above-mentioned type, each flow control unit comprises rigid poppet elements which are designed to form a seal on corresponding conical valve seats. Valves of this type present numerous problems due, in particular, to the rigidity of the poppets: in fact, the use of rigid poppets calls for an intricate and expensive manufacture of the valves due to the need to provide adequate structural contrivances to compensate for any errors or tolerances, both during the setting of the valves and during their use. Moreover, the sliding valves of the aforementioned type are not capable of automatically compensating for the wear of the poppets and/or valve seats; consequently, they have a relatively short working life and are not entirely reliable in use.

Therefore, a scope of this invention is to provide a sliding valve comprising a poppet-type spool provided with flow control units which are capable of automatically compensating for any differences in the working strokes, due either to errors or to manufacturing tolerances, or to the wearing down of the poppets and valve seats themselves, and which also make it possible to substantially reduce the working stroke of the spool itself, with respect to the previously known valves.

A further scope of the invention is to provide a sliding valve of the five-way type, in which the inertia of the moving parts has been substantially reduced and in which it is possible to operate the valve at very high speed or switch it to its operating positions extremely rapidly, in the region of a few tenths of a second. The lesser amount of wear, due to the short stroke and reduced inertia of the spool supporting the poppets, results in a longer working life of the valves.

From tests carried out, it has been ascertained that the combined use, in each fluid control unit, of a poppet made of rigid material, suitable, that is, for forming a seal between the central distribution chamber and a lateral one for feeding the fluid under pressure to an apparatus, and such as to define an accurate working position of the spool, together with a poppet element of the flexible type which provides a front sealing surface, lying in a radial plane, substantially at right angles to the axis of the spool, makes it possible to achieve automatic compensation of any differences in the working strokes of the two fluid control units. With this combination, and a particular embodiment of the flexible poppet element, it has been possible to solve the aforementioned problems, whilst providing a valve extremely simple in structure, highly reliable in use and with a very high switch-over speed, thanks to the substantial reduction in the stroke of the spool, equal to approximately 50%, and an increase in the switchover speed of approximately 30% with respect to known valves.

A sliding valve according to this invention will be described in greater detail hereunder, with reference to the accompanying drawings, in which:

Fig. 1 shows a longitudinal cross-sectional view of a bistable sliding valve;

Fig. 2 shows an enlarged detail of a flow control unit forming part of the sliding valve of the previous figure.

The invention will be described hereunder, with reference to a bi-stable sliding valve, in which the spool supporting the poppet elements presents two working positions, however, it is obvious that the invention may also be applied to other types of sliding valves, for example, to mono-stable sliding valves, without thereby deviating from the inventive principle claimed herein.

As shown, the sliding valve comprises a valve casing 1, having longitudinal cavities defining a set of axially aligned chambers, as described hereunder. In particular, the aforementioned cavities define a first distributing chamber 2, also referred to as central chamber, which communicates with a source of fluid under pressure, for example, air at a pressure equal to, or even over, 10 BAR, through a radial inlet 3, arranged in the casing 1 of the sliding valve; situated on either side of the central chamber 2 are lateral chambers 4 and, respectively, 5 from which the fluid is fed under pressure to a utilizing circuit or equipment (not shown) through respective outlets 6 and 7. Lastly, references 8 and 10 indicate a fourth and a fifth exhaust or discharge chambers, axially aligned with the lateral chambers 4 and 5, which open out towards the atmosphere through respective exhaust apertures 9 and 11.

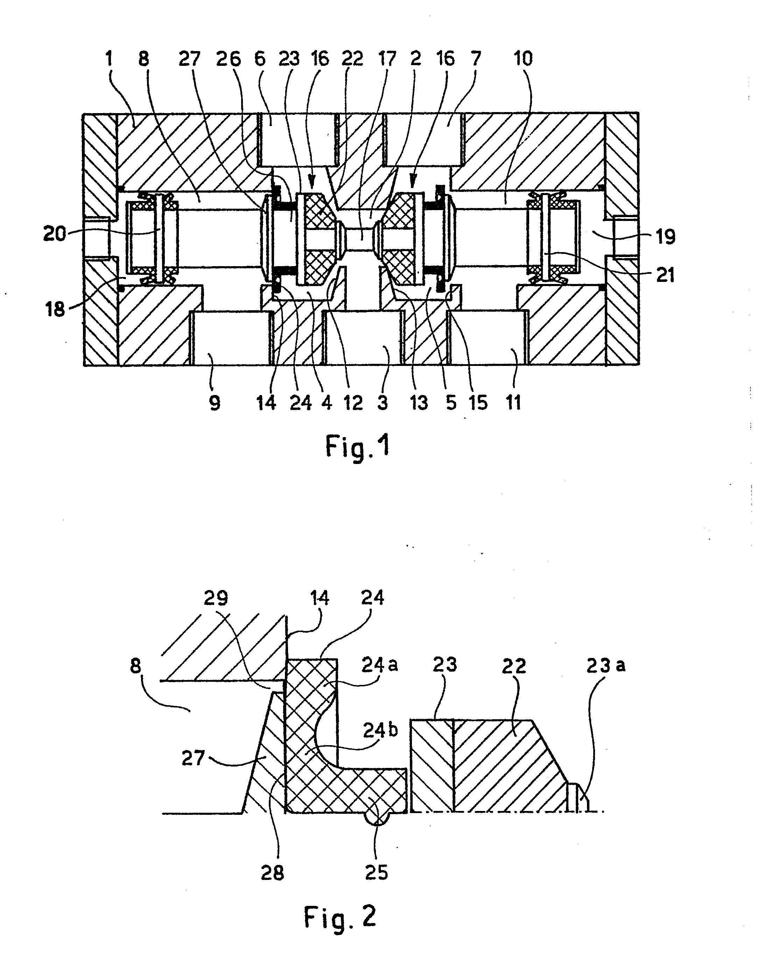

As shown, in figure 1, it is clear that each lateral chamber 4, 5 communicates on one side with the central chamber 2 through a first circular valve seat 12, 13, and communicates on the opposite side with an exhaust chamber 8, 10 through a second circular valve seat 14, 15 opposite the valve seat 12 and, respectively 13, in the lateral chambers 4, 5.

Situated inside each lateral chamber 4 and 5, between the valve seats 12, 14 and, respectively 13, 15 is a fluid control unit 16, secured to a spool 17, which moves axially within the aforesaid chambers between two extreme operative positions which, according to the type of valve taken into consideration, may both, or only one of them, be of stable equilibrium, depending upon the resulting force of the various pneumatic pressures exerted on the opposing sides of the fluid control unit 16 and on the ends or heads of the spool 17. In particular, in the example shown, the sliding valve is of the bi-stable type and the axial movement of the spool 17 with the respective fluid control units 16, is achieved pneumatically by means of pulses of fluid under pressure which are fed into control chambers 18 and 19 in which slide the pistons 20 and 21 which are connected to the ends of the spool 17. Consequently, in this case it is obvious that in order to ensure maximum stability of the spool, in the two extreme positions, so as to achieve a sufficient thrust on the seals to prevent them from accidentally shifting, for example, due to any increases in the pressure, the diameter of the valve seats 14 and 15 relating to the exhaust chambers 8, 10 should preferably be greater than the diameter of the valve seats 12 and 13 relating to the central or distributing chamber 2, in correspondence with the points of contact with the poppet elements.

As shown in the view of fig. 1 and in the detail of fig. 2, each fluid control unit 16, according to this invention, comprises a rigid poppet element consisting of a metal plug 22, or made of other suitable material, fixed to the spool 17 and held axially between two flanges 23 and 23A. Each fluid control unit 16 comprises a second flexible poppet element made of rubber or other suitable material, which defines a flat front sealing surface, designed to close against the valve seat 14 and, respectively 15. The axial distance between the rigid poppets 22 of the two control units 16, at the points of contact with the valve seats 13, 14, must be greater than the distance between the seats themselves in order to permit the closing of the central chamber 2 against a lateral chamber and, respectively, the communication of said central chamber 2 with the other lateral chamber, or viceversa; moreover, the distance between the front sealing surfaces of the two poppets of each fluid control unit 16, must be less than the axial length of the chamber 4, 5 or less than the distance between the points of contact with the poppets of the valve seats 9, 12 and, respectively, 11, 13 in order to allow the diverting of the fluid. The lengths of the two lateral chambers 4 and 5 must, of course, be practically identical, not counting manufacturing tolerances, just as the axial lengths of the two fluid control units must also be identical, still referring to the points of contact with the valve seats; however, the particular structure of the flexible poppets 24, described further on, makes it possible to automatically compensate for any possible manufacturing errors, as well as the wearing down of the seats and the poppets themselves without jeopardizing the efficiency of the valve and simultaneously reducing the working stroke of the poppet-spool.

As shown by the figures, each poppet element 24 is in the form of an annular flange or seal made of rubber or the like, which is suitably disk-shaped in order to bend sideways in a direction contrary to the closing movement, that is to say, in the opposite direction to its valve seat 14, 15; said flange or disk 24 is secured to a sleeve 25 which is tightly fitted into a groove 26 in the spool 17, defined between the shoulder 23 supporting the poppet 22 and an annular shoulder 27 from which the flexible flange or disk 24 protrudes radially due to the fact that it is supported on the side facing towards the valve seat 14 and, respectively 15.

As shown in the enlarged view of fig. 2, the annular shoulder 27, axially supporting the disk 24, presents an overall diameter which is slightly smaller than the internal diameter of the exhaust chamber 8, 10 so that the flexible disk or flange 24 of the poppet is supported axially over most of its width; this prevents said flange 24 from being lifted or accidentally detached from the valve seat 14 or 15, by the fluid itself under pressure. It is pointed out, merely by way of information, that it is sufficient for the outer edge of the annular shoulder 27 to detach itself very slightly, for example, by a few tenths of a millimeter, from the internal surface of the exhaust chamber, in order to achieve a correct support of the disk 24 and correct operation of the sliding valve.

Fig. 2 of the drawings shows a particular conformation of the disk 24; it can be seen from said figure, in fact, that the disk 24 comprises a first outer annular portion 24a, of greater thickness, which is joined to a less thick intermediate portion 24b so as to constitute a sort of elastically flexible connection which joins the annular edge 24a to the aforesaid sleeve 25.

As shown in the enlarged cross-sectional view, the face 28 of the disk which faces towards the valve seat 14, is flat and is arranged substantially at right angles to the axis of the spool 17, whereas the opposite face presents a first flat section, parallel to the face 28 in correspondence with the annular portion 24a, which is followed by a second concave section, in correspondence with the portion 24b which joins together with the first flat section and the sleeve 25. In order to prevent the disk from being accidentally lifted up, thus jeopardizing the efficiency of the sliding valve, it is preferable for the annular portion 24a of greater thickness, to have a sufficient radial width as to overlap the annular slit 29 existing between the outer edge of the shoulder 27 and the edge of the valve seat, or the internal surface of the exhaust chamber 8 or 10. In these conditions, the thicker annular portion 24a always ensures a perfect seal thanks to the thrust exerted on the disk itself by the pressure of the fluid. In fact, the flexible hinge connection 24b between the annular portion 24a and the sleeve 25 and the presence of arched surfaces in correspondence with the points of connection, enables the disk 24 to adhere perfectly, with its flat face 28, both to the supporting shoulder 27 and to the valve seat 14, even for displacements of a few tenths of a millimeter, or greater than manufacturing tolerances, caused for example by the wearing down of the valve seats and/or poppets 22 of the two fluid control units 16, even though deviating from the theoretical stroke of the spool 17; moreover, it is clear from what has been described and shown, that the stroke of the spool 17 may be reduced considerably in that a slight movement is sufficient to guarantee a perfect seal and to automatically compensate for wear, in both working positions.

To fit the spool 17 into the valve casing 1, the latter is provided with extreme lids through which it is possible to introduce the components of the spool itself; in particular, the spool is composed of several parts, for example, a central part supporting the poppets with threaded shanks onto which said poppets are slipped and onto which the extreme pistons 20 and 21 are screwed when the valve is assembled.

Claims

1. - Sliding valve, comprising a valve casing (1) defining a central distributing chamber (2) connected to a fluid inlet (3) and, respectively, to outlets (4, 5) by means of lateral chambers (6, 7) axially aligned with the central chamber (2) and a sliding poppet-spool (17) which is provided with a fluid control unit (16) in the aforesaid lateral chambers (6, 7) each control unit (16) being designed to close against a first valve seat (12, 13) communicating with the central chamber (2) and, respectively, against a second valve seat (14, 15) communicating with a respective exhaust chamber (8, 10), characterized by the fact that each fluid control unit (16) comprises a first rigid poppet element (22) designed to close against said first valve seat (12, 13) and a second poppet element (24) axially aligned with and opposite the first, said second poppet element (24) comprising an elastically flexible disk which protrudes radially from a supporting annular shoulder (27) situated on the side of the disk which faces towards the aforesaid second valve seat.

2. - Sliding valve as claimed in claim 1, characterized by the fact that said disk comprises an external annular portion, connected to an internal sleeve by means of an intermediate portion of lesser thickness, defining a flexible hinge-type connection.

3. - Sliding valve as claimed in claims 1 and 2, characterized by the fact that said external annular portion is arranged astride the slit existing between the edge of a shoulder supporting the disk and the edge of the corresponding valve seat.

4. - Sliding valve as claimed in the previous claims characterized by the fact that said disk of the second poppet element and the corresponding valve seat present opposing flat sealing surfaces arranged substantially at right angles to the axis of the aforesaid poppet element.

5. - Valve as claimed in claim 2, characterized by the fact that said external annular portion of the disk is connected to the internal sleeve by means of an intermediate portion, one side of which presents arch-shaped surfaces.

6. - Sliding valve as claimed in any of the previous claims in which said valve is of the mono-stable type.

7. - Sliding valve as claimed in any of the claims from 1 to 5, in which said valve is of the bi-stable type.

8. + Sliding valve as claimed in claims 6 or 7, characterized by the fact that pneumatic control pistons are provided on the ends of said spool.

9. - Sliding valve as claimed in claim 1, characterized by the fact that the diameter of the valve seats (14, 15) relating to the exhaust chamber (8, 10) is greater than the diameter of the valve seats (12, 13) relating to the central chamber (2), in correspondence with the points of
contact with the poppet elements.

0129665

1/1

**Fig.1**

**Fig. 2**

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | GB-A-2 011 585 (ETABLISSEMENT D'OCCIDENT VADUZ) * abstract; figures * | 1,3 | F 16 K 11/04 F 15 B 13/042 F 16 K 31/122 |
| Y | US-A-1 921 092 (NEWTON) * claim 1; figures * | 1,9 | |
| A | FR-A-2 282 592 (HYDRO-PNEUMATIC) | | |
| A | DE-A-1 500 089 (HERION) | | |

TECHNICAL FIELDS SEARCHED (Int. Cl. ³)

F 16 K
F 15 B

The present search report has been drawn up for all claims

| Place of search | Date of completion of the search | Examiner |
|---|---|---|
| THE HAGUE | 10-10-1984 | VAN REETH A.L.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82